# EUROPEAN PATENT SPECIFICATION

(11) **EP 0 515 491 B1**
(45) Date of publication and mention of the grant of the patent: **11.05.1994**
(21) Application number: 91904453.7
(22) Date of filing: 21.02.1991
(51) Int. Cl.: B01D 71/02

(54) **INORGANIC MEMBRANES AND A PROCESS FOR MAKING INORGANIC MEMBRANES**
ANORGANISCHE MEMBRANEN UND VERFAHREN FÜR DIE HERSTELLUNG VON ANORGANISCHEN MEMBRANEN
MEMBRANES INORGANIQUES ET PROCEDE DE LEUR FABRICATION

(30) Priority: 21.02.1990 NL 9000417
(43) Date of publication of application: 02.12.1992
(73) Proprietor: NEDERLANDSE ORGANISATIE VOOR TOEGEPAST-NATUURWETENSCHAPPELIJK ONDERZOEK TNO, 2595 CL Den Haag (NL)
(72) Inventor: GEUS, John, Wilhelm, NL-3723 GJ Bilthoven (NL); MULDER, Allette, NL-3572 TN Utrecht (NL)
(74) Representative: Smulders, Theodorus A.H.J., Ir.
(86) International application number: NL9100029
(87) International publication number: WO9112879

(56) References cited:
- EP-A- 0 040 282
- EP-A- 0 395 184
- FR-A- 2 424 756
- US-A- 3 022 187
- US-A- 3 497 394

## Description

### Inorganic membranes and a process for making inorganic membranes.

In many industrial processes, there is a need for efficient separation processes, in which solid and/or dissolved particles are separated from liquids, or solid particles are removed from gases, or different gas or vapour molecules are separated.

According to the present state of the art, there are a large number of processes, such as centrifugation or filtration for separating solid particles from liquids. These processes may be carried out continously or discontinuously. If it is desired to treat small quantities of liquid, or when the liquid-solid mixtures to be filtered are not continuously available, the process selected is often a discontinuous one. This applies in particular to filtration processes using, for example, cloth filters mounted in filter presses.

There is at present a fast development in the technique of filtering liquids. Using current "classic" filtration processes, solid particles of dimensions down to about 1 µm can be separated from liquids. The separation of solid particles having dimensions less than about 10 µm is called microfiltration. There is, however, a large need for the separation of still smaller particles from liquids, such as macromolecules and bacteria. In filtration processes effecting the separation of particles having dimensions down to 50 nm, the term ultrafiltration is used. These processes enable the separation of viruses and macromolecules from liquids by filtration. Furthermore, there is a need for the filtration of still smaller units, such as low molecular substances, such as sugars, monomers, amino acids and even dissolved ions. The term used in the separation of this kind of extremely small units is reverse osmosis; sometimes referred to as hyperfiltration.

For use in the separation of small bodies by filtration, membranes on the basis of polymers have been developed. When the membranes are processed to form hollow fibres with a very small diameter, it is possible to produce a very large filtering surface area per unit volume. Such membranes in principle offer good perspectives for technical application.

However, the mechanical strength of such polymeric membranes is often limited. The result is that it is impossible to apply a high pressure differential across the membrane. Also, the chemical and thermal stability of such polymeric fibres is often found to be a limiting factor; the membrane system will then have a short service life. For the separation of components of small to very small dimensions from liquids, therefore, there is a clear need for membranes having a high mechanical, chemical and thermal stability. Thus, for biochemical uses, membranes that can be sterilized by being steam treated would be very attractive. Polymeric membranes do not generally permit such treatments.

To meet the need for mechanically, chemically and thermally more stable membranes, inorganic membranes of very fine pores have been developed for the filtration of liquids (cf H.P. Hsieh, "Inorganic Membranes", AIChE Symp.Ser 84 (261). For use in liquid filtration, porous membranes on the basis of materials such as stainless steel, silver, aluminium oxide, zirconium oxide and glass are at present commercially available. The diameter of the pores is commonly in the range between 10 and 0.1 µm, which renders these membranes suitable for use in microfiltration. The art has also been successful in realizing pore diameters down to 4 nm. These membranes are in principle suitable for ultrafiltration purposes.

Membranes having finer pores (below about 1 µm) are commonly characterized by a layered structure: a coarsely-porous substrate is successively overlaid with layers of decreasing pore size. During such application, it is ensured that the particles of a new layer being applied have such a size that they cannot penetrate the pores of the porous layer already present. The result of this structure of the membrane is that in particular finer-porous inorganic membranes require several layers. This causes a relatively high hydrodynamic resistance and hence a low permeate flux. The relatively large thickness of the finely-porous layers increases the resistance still further; such thickness would commonly vary from several micrometers to several tens of micrometers. Compared with the active layer of asymmetric ultrafiltration membranes built up from polymers, this is a large thickness; the thickness of polymeric membranes usually ranges between 0.1 and 0.5 micrometer (cf H.L. Flemming, Proceedings Membrane Planning Conference, Cambridge MA, October 20-22, 1987).

The laminate structure of present-day inorganic membranes further has for its consequence that very careful proceedings are needed to produce a stable membrane. It is especially the bonding between the various layers and the prevention of the formation of fissures and cracks during the drying stages which require a great deal of attention. Usually, organic chemical aids (bonding agents, viscosity increasers) are used in the application of the layers to prevent cracking and promote bonding.

It is therefore attractive to reduce the thickness of the porous layers and facilitate the manufacture of membranes having a suitable pore distribution. It is also of importance to improve the width of the pore size distribution in the membrane. The pore diameter distribution of current finer-porous inorganic membranes suitable for ultrafiltration is relatively wide relative to that of polymeric membranes. The relatively large range of pore diameters in present-day inorganic membranes leads to a lower acuity in the separation and a higher sensitivity to fouling through clogging of the pores.

In connection with the further development of liquid filtration, it would be attractive to have membranes having still narrower pores and with a well-controllable distribution of pore dimensions. The known inorganic membranes suitable for that filtration commonly take the form of tubular modules (glass membranes as hollow fibres). Thus, a different, very important requirement to be imposed upon such membranes is that they permit being processed to form modules for the filtration of large quantities of liquid. Present-day inorganic membranes are difficult to process into modules. The result is that the cost price of suitable modules greatly exceeds the price of the inorganic membranes constituting them. It is especially membranes on the basis of a metal or metal alloy that would be highly attractive in this connection. Metallic membranes are much easier to process into suitable modules.

Excellent modules on the basis of metals or alloys are commercially available. However, the dimensions of the pores in these membranes are at present not smaller than 1 µm. Smaller pore dimensions cannot at present be realised with metallic membranes. One of the objects of the present invention is, therefore, to provide membranes on the basis of suitable metals or alloys having considerably narrower pores.

In this connection it is noted that the term "inorganic membranes" as used in this specification is the term conventional in the art. However, the present invention relates more generally to membranes, including for example, glass membranes, metallic membranes, and membranes built up in full or in part of carbon, which are also sometimes termed "inorganic membranes" in the art.

There is also a need for suitable membranes for the separation of solid components from gas and vapour mixtures. Very small particles can be collected from gas streams by means of electrostatic precipitators. At high temperatures, however, that method is not very feasible by reason of the fact that in that case sparking (discharge) already occurs at a low voltage. A different method is based on filtration by mechanical separation. In it, use is often made of grain beds. However, the trapping efficiency of such beds depends upon the particle size. In particular, particles having a diameter of from 0.3 to 3 µm are poorly trapped. A membrane having a controllable pore size will be capable of filtering a gas stream in such a manner that the trapping efficiency will be much less dependent upon on the particle size. It is accordingly another object of the present invention to separate solid particles having sizes of from 0.1 to 3 µm from gas streams having a temperature of up to about 850°C.

There is further a large need for the possibility of separating certain gas molecules from gas and vapour mixtures. Up until now, the separation of gas mixtures is generally effected by cryogenic means or by absorption-desorption processes.

In cryogenic gas separation, the gases are liquefied by cooling, and the resulting liquid mixture is distilled. Although this proces has been very well elaborated from a technical point of view, it is relatively expensive on account of the required equipment (investments) and the mechanical energy needed to bring the gas mixture at the required pressure. Moreover, gas mixtures often become available at high temperatures. Thus, the gas mixture must then first be greatly cooled for cryogenic separation. As, subsequently, the separated gases must often be used in chemical reactions at high temperatures, the intermediate cooling results in poor energy efficiency.

The separation of gaseous components by adsorption also gives technical problems. Generally speaking, the gas mixture must be cooled to ensure sufficient adsorption. A further requirement is for the adsorbed quantity to vary greatly with the pressure. It is then possible to have the component(s) to be separated alternately adsorbed and desorbed by varying the gas pressure ("pressure-swing"). Although that process is being successfully used on a technical scale, suitable adsorbents are not available for many cases.

There is accordingly a great need for membranes capable of separating gas mixtures at high temperature. Present-day commercial polymeric membranes developed for gas separations are limited in their use to temperatures below about 150°C.

For gas separations at higher temperatures, relatively "imperforate" inorganic membranes have been developed in the past, whose separating action is based on a sorption-diffusion mechanism. Thus, hydrogen-permeable membranes of palladium and palladium alloys with silver, ruthenium, nickel and other metals are known (cf V.M. Gryaznov, Platinum Metals Rev. 30 (1986) 68). Oxygen-permeable membranes are made from yttriumoxide stabilized zirconium oxide (cf Y. Nigara, B. Cales, Bull.Chem.Soc.Japan, 59 (1986) 1997), while silver membranes have also been proposed for the separation of oxygen (cf V.M. Gryaznov et al, Kinet.Katal. 27 (1986) 142). Furthermore, relatively imperforate membranes of carbon, produced by pyrolysis of polymeric membranes have been described (cf J.E. Koresh, A. Soffer, Sep.Sci.Technol. 18 (1983) 723). A disadvantage of these "imperforate" or "dense" gas separation membranes is their low permeability (flux) as a result of which they cannot be used industrially in an economic manner. This does not apply to the transport of hydrogen through palladium containing membranes. Here, however, an important role is played by the palladium surface being poisoned by, for example, silver compounds.

Another method in which the use of membranes capable of separating gas mixtures at high temperatures is suggested is the combination of membrane separation with a catalytic reaction (cf H.P. Hsieh, "Inorganic Membrane Reactors - a review", AIChE Symp.Series; also compare P.K.T. Liu et al, "Use of microporous ceramic membranes as catalytic reactors for dehydrogenation processes, paper presented during November-Symp. AIChE, USA (1989). In many catalytic reactions, the thermodynamic equilibrium highly limits the conversion of the reactants. When it is possible for the concentration of one of the reaction products to be reduced by removing it selectively from the reaction mixture through a membrane, much higher conversions can be reached. This applies to a number of catalytic reactions. It is in particular of importance for dehydrogenation reactions. When such a reaction is carried out in the presence of a membrane selectively passing hydrogen, technically suitable conversions can be reached at a much lower temperature. This is very attractive, because at the high temperatures now needed to reach a technically suitable conversion, a considerable fraction of the feedstock is decomposed and deposited on the catalyst as carbon.

As stated before, the use of inorganic membranes-for the separations of solids and gases and of gas mixtures has been proposed many times. Generally speaking, composite inorganic membranes are used for these purposes. To a relatively thick, coarsely-porous substrate, the "carrier", a thin layer is applied having pores of the small diameters required for the separation. By reason of the required mechanical strength, the thickness of the carrier is mostly 2 mm or more. When pores having the diameter required for the separation extend throughout the entire thickness of such a carrier, the flow resistance through the pores is very high. Generally speaking, transport through such a membrane is too slow for technical uses.

Pores having the desired small dimensions can at present also be made of ceramic components. Cf H.P. Hsieh, "Inorganic Membrane Reactors - A review", AIChE - Symp Series). Present-day inorganic membranes are therefore made of oxides, such as, for example, aluminium oxide. To a coarsely-porous aluminium oxide sheet at least several millimeters thick, a thin layer of the desired narrow pores is applied. It is of great importance that the pore diameter distribution in the thin layer should be as narrow as possible. The finely-porous layer must connect faultlessly with the coarsely-porous layer throughout its entire surface. One single crack will adversely affect the separation efficiency to a marked degree. In order that a thin finely-porous layer may be uniformly applied to a coarsely-porous substrate, the coarsely-porous carrier must have a very smooth surface. It must not have any defects, such as scratches and small irregularities, as these lead to leakage in the thin, narrow-porous ceramic layer. However, such layers are difficult to make. The production of coarsely-porous ceramic sheets with a fairly smooth surface without cracks or holes turns out to be a difficult problem according to the present state of the art. In particular the combination of a coarsely-porous substrate, which owing to its large pores has a low flow resistance to liquids, and a very finely-porous top layer is difficult to realize. Generally speaking, therefore, a thin intermediate layer is used which has an intermediate porosity.

Thermal stresses are generally a major problem in inorganic membranes. The coefficients of expansion of different layers must not, therefore, differ too much from each other, because otherwise a change in temperature of the membrane may cause the top layer to scale off the substrate. It has been proposed to make the finely-porous layer very thin. It would then better be able to take thermal stresses. However, a thin layer is difficult to apply as a continuous layer without defects to a coarsely-porous substrate.

These membranes must be mounted between the retentate and permeate volumes in a fluid-tight manner. To provide a proper seal, the inorganic membranes must generally be clamped between sealing surfaces. When the membranes are so mounted at room temperature, and the equipment is then brought to the temperature at which the separation is to be carried out, this will often cause the inorganic membrane to burst. The ceramic material is unable to take up the forces resulting from a difference in coefficients of expansion of the various components.

In EP-A 40282 a process for the production of a dry, inorganic ultrafiltration membrane is disclosed. In said process the surface of a microporous membrane support is coated with a membrane coating material in the presence of a volatile liquid medium.

It is an object of the present invention to provide a membrane which is easy to make, is mechanically strong, chemically stable, can be used at higher temperatures, and has a well-controllable pore size and pore diameter distribution. According to the present invention, this object is realized by filling pores of a coarsely-porous membrane incompletely with a finely-porous material. Preferably, the length through which the pores are filled with finely-porous material is no more than 50 micron, more preferably no more than 10 micron, while best results are obtained when the pores are filled with finely-porous material through a length of less than 1 micron. As the finely-porous material is applied in the pores of a coarser-porous material damage to the often quite vulnerable surface of the coarsely-porous layer is much less detrimental.

It is also possible to start from an asymmetric body having membrane properties and built up from a coarsely-porous layer with a thin top layer thereon having narrower pores. One example of such an embodiment is a body having membrane properties and consisting of a layer of, for example, several millimeters thick and having pores of 30 micron and a top layer 5 micron thick and having pores of 1 micron or less. According to the present invention, the finely-porous layer is applied in the pores of said thin top layer through a length of less than 5 micron.

Surprisingly, it has turned out to be possible to effect local sol-gel conversions in pores, by means of which the pores of a coarsely-porous membrane can be filled through a small distance in a highly controlled manner.

The sol-gel process is known to be very suitable for the manufacture of glassy or ceramic products having a desired, highly pure and homogeneous composition. A gel is formed by polymerization of alkoxides or by the gelation of a hydrosol. In the latter method, a sol, i.e. a more or less stable dispersion of colloidal particles in an aqueous medium, is converted into a gel when the system is destabilized, for example, by temperature variations. The polymerization is mainly based upon the condensation of M-OH groups (where M represents the metal ion). The product of this reaction is a hydrogel. The polymerization of a metal alkoxide, M(OR)₄ (where M is a metal ion and R an alkyl group) is possible because hydrolysis and the condensation reactions occur in the solution when a small quantity of water is added to the organic solution. These reactions can be catalyzed by an acid or by a base. The method of preparation followed determines the structure and morphology of the alcogel formed.

In the method described above, we preferably use alkoxy compounds of the desired metal ions, such as TEOS (tetraethyl orthosilicate), butyl aluminate (aluminium secondary butoxide), tetraethyl orthotitanate or tetrapropyl zirconate. When these partially hydrolyzed compounds are allowed to flow over a layer of trichloroethane, alcohol dissolves in the organic liquid layer. As a result the alcohol-water layer containing the metal ions is gelled.

A membrane according to this invention is made by applying an accurately metered quantity of a colloidal solution or of a suspension of somewhat larger solid particles to a substrate of a liquid that is immiscible or poorly miscible with water and/or alcohol and has a higher density than water and a relatively high surface tension. The immiscible or poorly miscible liquid has a known geometrical surface. This surface is given by the vessel containing the liquid. The thickness of the layer of the colloidal solution or suspension can be well-controlled by accurately metering the volume. The colloidal solution or suspension has a strictly uniform thickness, as it flows out over the necessarily smooth surface of the immiscible or poorly miscible liquid. In order that the thickness of the aqueous layer may be accurately controlled, it is of importance that the walls of the vessel containing a water-immiscible or poorly water-miscible liquid with the colloidal solution or suspension thereon are hydrophobic. When the aqueous colloidal solution or suspension wets the wall of the vessel much better than does the water-immiscible or poorly water-miscible liquid, a portion of the aqueous layer penetrates between the wall and the water-immiscible or poorly water-miscible liquid. The thickness of the aqueous layer can then no longer be set with the required precision.

The water-immiscible or poorly water-miscible liquid is present in a vessel disposed so as to be free from vibrations and in which, supported at a few places only, a coarsely-porous layer of the desired thickness has been provided. This layer is accurately placed in a horizontal plane by means of a spirit level and a few levelling screws. The height of the water-immiscible or poorly water-miscible liquid can be adjusted at will with a supply tube provided in the bottom part of the vessel.

Surprisingly it has been found that the height of the level of the liquid surface in the pores of the coarsely-porous layer can be properly determined with an incident-light microscope.

According to one embodiment of the method according to the invention, the colloidal solution or suspension is poured over the water-immiscible or poorly water-miscible liquid. The coarsely-porous carrier is then still above the liquid. Subsequently, the level of the liquid is adjusted to the desired height, whereafter the colloidal solution or suspension is allowed to gel. This can be effected in known manner. For example, the aqueous layer can be brought with infrared radiation to such a higher temperature that a hydrolysis process is going to proceed, which via polymerization leads to gelation. One example is the hydrolysis of urea or a cyanate. It is also possible, starting from an alcoholate of the ultimately desired metal ion, to contact the liquid surface with a volatile acid or a volatile base, whereby gelation can be initiated. This process can also be used in applying a mixture of different metal oxides or a mixed oxide.

A different preferred embodiment of the method according to this invention relates to the addition of the liquid containing the partially hydrolyzed compounds of the metal ions to be applied. According to this embodiment, the water-immiscible or poorly water-miscible liquid is caused to rise in the membrane until the surface is just reached. In that case the liquid containing the metal ions to be gelled is not yet present on the layer of the water-immiscible or poorly water-miscible liquid. Subsequently, the liquid to be gelled is allowed to flow over the membrane in the quantity needed for the required thickness of the layer. It has surprisingly been found that the water and alcohol containing liquid wets oxidic and metallic porous layers much better than do organic liquids. The subjacent liquid that is immiscible or poorly miscible with water and/or alcohol, generally an organic liquid, is displaced by the alcohol and water mixture.

According to yet another embodiment of the method according to this invention, the level of liquid is above the coarsely-porous layer in the initial condition. Through an opening provided in the bottom part of the vessel, such an amount of liquid is now carefully allowed to drain off that the level of the liquid surface decreases to the desired height in the coarsely-porous membrane. This embodiment is preferably used in applying a less porous layer, later to be filled (partially) with finely-porous material, on a coarsely-porous substrate. In that case, an aqueous suspension of the coarser particles or a suitable colloidal solution is applied to the surface of the coarsely-porous substrate by adjusting the surface level of the liquid on the surface of the coarsely-porous layer. When the liquid surface has been adjusted to the desired level, gelation is caused to proceed in any of the above manners. The application of a thin porous layer on a coarsely-porous substrate, and the adjustment of the pore diameter distribution by a thermal or hydrothermal treatment to be carried out after the removal from the liquid and drying also forms part of the present invention.

In the method according to this invention, the thin porous layer may be applied in two or more stages within the pores of the coarsely-porous carrier. In the first stage, a thin layer with relatively wide pores is applied. In a subsequent stage, the required quantity of the material to be deposited is caused to be sucked through the pores of the thin layer, which naturally are narrower than the pores of the coarsely-porous layer.

In a particularly preferred embodiment of the method according to the present invention, first a thin layer of a suitable compound with relatively wide pores is applied in accordance with this invention. This compound has been so selected that material precipitating during a subsequent deposition-precipitation process is only deposited on the compound initially applied. This procedure is used frequently and with great success for the preparation of catalysts in which the catalytically active component is applied to a thermostable carrier. By carrying out the precipitation from a homogeneous solution, it is achieved that nucleation of the precipitate cannot occur within the solution proper, but only on the surface of a suspended carrier material. In this way a catalytically active membrane can be made. The same technique can be used with advantage to accurately control the dimensions of the pores of a thin layer applied within a coarsely-porous matrix.

According to an alternative embodiment of the method according to this invention, first a liquid with a suitable melting point is introduced into the pores of the coarsely-porous layer, which is subsequently allowed to solidify. It is also possible to use a gelatin solution, which is caused to rise to a certain height within the coarsely-porous layer at a high temperature, whereafter the system is allowed to cool. When, in this way, the pores have become filled for the desired length, a thin layer with a precisely metered volume of a colloidal solution or a suitable suspension is caused to flow over the layer. Depending on the pore diameter of the coarsely-porous layer, it may be necessary, in order that the colloidal solution or the suspension may flow out, that the system is subjected to a somewhat reduced pressure to prevent the occlusion of gas in the pores. After the gelation of the colloidal solution or the suspension, the solidified liquid is removed by re-melting. A gelatin layer is removed by oxidation in the air.

The use of a membrane in the form of a cilindrical tube (possibly closed at one end), is very attractive for a number of uses. In order to apply a layer within a finely-porous tube one will preferably use the last-mentioned method according to the invention. In that case, the coarsely-porous tube is mounted and accurately centered in a closed cilinder, and the cilinder with the coarsely-porous tube is rotated. Subsequently, such a volume of a melt or a gelatin containing liquid is supplied that the porous tube is filled through the desired distance from the outside inwardly. The volume added determines the height to which the pores are filled. After solidification of the liquid or hardening of the gelatin containing liquid, the desired quantity of a colloidal solution or a suspension is caused to flow over the (internal) surface of the rotating porous tube, and subsequently allowed to gel.

In a particular embodiment of the method according to the invention, use is made of a coarsely-porous membrane to which a thin layer with much narrower pores has been applied. Such asymmetric membranes are commercially available, both of metal and of ceramic material. Surprisingly it has been found that a water and alcohol containing liquid mixture containing fully or partially hydrolyzed metal compounds can be selectively applied in the narrow-porous part of the membrane. The concentration of the gelable metal compounds is so adjusted that after gelling and drying a layer has been applied within the fine pores over the desired length.

This last method according to the present invention is particularly suitable for applying extremely fine porous material within porous tubes over small distances. This kind of tubes is extremely suitable for constructing modules for the separation of particles from relatively large liquid streams.

Suitable coarsely-porous layers are ceramic layers or tubes. Aluminium oxide or zirconium dioxide are suitable for making such coarsely-porous layers or tubes. Many porous materials are commercially available in a desired shape. In addition to oxidic materials, bodies of porous carbon are commercially available.

Preferred starting products in the method according to the invention, however, are sintered metallic bodies. In addition to a high mechanical strength, such porous bodies exhibit a good chemical and thermal stability. Membranes made in accordance with this invention, on the basis of metallic carrier materials are excellently able to absorb thermal stresses. Also, such membranes are very suitable for incorporation in modules. Finally, it is excellently possible to apply a very thin layer of a suitable metal (hydr)oxide or hydrated oxide within a metallic membrane. Thereafter the pore size can be accurately adjusted by carrying out deposition-precipitation. Generally speaking, metal (hydr)oxides or hydrated metal oxides do not precipitate on metallic surfaces. The pore size distribution can be determined by thermo-porometry without removing the aqueous solution from the membrane. In this way, the course of the pore diameter distribution can be monitored during the precipitation process.

In addition to the separation of particles from gases and liquids and for the separation of the components from gas mixtures, the membranes according to the present invention are very suitable for use in pervaporation and vapour permeation processes. This applies in particular to membranes based on sintered metals. A pervaporation process using a membrane consisting of a very thin ceramic layer applied within a sintered metallic layer is accordingly part of the present invention. A major problem in pervaporation processes is the supply of the heat of evaporation to the liquid containing the components to be separated. The high heat conductivity of metallic membranes makes it possible for the heat of evaporation to be directly supplied to the membrane by thermal conduction. Preferably, this is effected by connecting the metallic membrane thermally with a combustion catalyst, in which the catalytically active component is also applied to a sintered metal. Copper oxide lends itself excellently to being used as a combustion catalyst. In vapour permeation processes, too, the easy supply of thermal energy to metallic membranes is of great importance.

The invention is illustrated in and by the following examples.

### Example 1.

Approximately 15 g of tetraethyl orthosilicate (TEOS) were dissolved in 13.2 g absolute ethanol, and to this 10.4 g 0.25M HCL were added with stirring. The solution contained in molar quantities

TEOS: water:alcohol:catalyst=1:8:4:0.03.
In order to accelerate the hydrolysis and polymerization-condensation, the solution was maintained at a temperature of 40°C for about 30 minutes. After cooling, 40 µl of this sol was applied to a coarsely-porous carrier having pores of about 1.5 µm, which were filled with tricholoroethane. The thickness of the coarsely-porous layer was 3 mm. Owing to the low surface tension of the sol, it flowed fully over the carrier surface (about 5 cm²). The sol displaced the organic liquid and subsequently gelled. Through shrinkage in thickness, an inorganic membrane was obtained with a coating about 30 µm thick.

By reason of the small volume of the membrane coating, the average pore diameter could not be accurately determined by condensation of nitrogen. For that reason, we determined the average pore diameter of a larger quantity of gel not applied within a coarsely-porous material.

After a heat treatment at 600°C, the pore diameter of the gel not applied within a coarsely-porous material turned out to be less than 18 Å.

### Example 2.

In the same way as described in Example 1, a similar membrane was made, but now with larger pores, starting from a gelling mixture obtained by mixing TEOS, ethanol and an aqueous solution of NH₄OH in a ratio of 1:2:4:0.01.

### Example 3.

An aluminium oxide membrane was made, starting from aluminium isopropoxide (Al(OC₃H₇)₃) or aluminium secondary butoxide, (Al(OC₄H₉)₃). A boehmite sol was formed by rapidly adding 2M alkoxide in 2-butanol to an excess of water having a temperature of 80 to 85°C with vigorous stirring (alkoxide : water = 1 : 100). After about 30 minutes, 0.07 mole of HNO₃ was added to peptise the precipitate and stabilize the resulting suspension. To remove the larger part of the butanol, the reaction vessel was opened at this temperature for a few hours. When there was practically no butanol left, the sol was refluxed overnight at a temperature of 90 to 100°C. The resulting sol was found to be excellently suitable for making membranes according to this invention, using any of the various methods of impregnation as described hereinbefore.

## Claims

1. An inorganic membrane comprising a mechanical coarsely-porous body having pores filed with a finely-porous or extremely finely-porous material, characterized in that the pores have been filled over a length shorter than the thickness of said porous body.

2. An inorganic membrane as claimed in claim 1, characterized in that the pores of the body are filled with finely-porous material over a length of no more than 50 micro-meters, preferably no more than 10 micrometers, and more preferably no more than 1 micrometer.

3. An inorganic membrane as claimed in claims 1 and 2, characterized in that the coarsely-porous body contains pores having a diameter of 100 micrometers to 50 nanometers.

4. An inorganic membrane as claimed in claim 1, characterized by comprising a coarsely-porous substrate having a thin, less porous coating thereon with substantially uniform pores of 10 micrometers to 5 nanometers, the pores of said coating being filled with extremely finely-porous material over a limited length.

5. An inorganic membrane as claimed in claims 1, 2 and 3, characterized in that the coarsely-porous body consists of sintered metal.

6. An inorganic membrane as claimed in claims 1, 2 and 3, characterized in that said coarsely-porous body consists of an oxide, such as aluminium oxide, silicon oxide, zirconium dioxide or titanium dioxide, or of carbon.

7. A method of making an inorganic membrane as claimed in any of claims 1-6, characterized in that a finely-porous layer is applied within a coarsely-porous layer by applying an accurately metered quantity of gelable liquid present on a liquid that is immiscible or poorly miscible with water and/or alcohol within said coarsely-porous layer, and subsequently completing the gelling process.

8. A method as claimed in claim 7, characterized in that the gelable liquid contains a (precursor of a) catalytically active compound.

9. A method as claimed in claim 7-8, characterized in that on one side of the coarsely-porous layer first a thin layer of a compound having relatively wide pores is applied, which compound has been selected so that during a subsequent deposition-precipitation of an insoluble compound from a homogeneous solution , the insoluble compound is only precipitated on the material initially applied.

10. A method as claimed in claim 7-8, characterized in that the gelable quantity of liquid is applied by causing the liquid which is poorly miscible with water or alcohol to rise within the coarsely-porous layer.

11. A method as claimed in claim 7-8, characterized in that the gelable quantity of liquid is applied by displacing, to a limited degree, a liquid that is poorly miscible with water or alcohol, which liquid just fills the pores of the coarsely-porous layer.

12. A method as claimed in claim 7-8, characterized in that the gelable quantity of liquid is applied by causing it to flow over the upper surface of a coarsely-porous layer, the pores of which are incompletely filled with a liquid that is poorly miscible with water or alcohol.

13. A method as claimed in claim 7-8, characterized in that the gelable quantity of liquid is applied by causing the level of a liquid that is poorly miscible with water or alcohol, and upon which a gelable liquid has been superimposed in the desired layer thickness, to lower to the desired position in a coarsely-porous layer.

14. A method as claimed in claim 7-8, characterized by starting from a body having pores which over a limited length have a diameter less than the diameter in the major part of the membrane.

15. A method as claimed in claim 14, characterized in that a gelable liquid is caused to be selectively absorbed within the part of the pores having the smaller diameter, and subsequently allowed to gel in otherwise known manner.

16. A method as claimed in claim 14, characterized in that a suitable material is caused to precipitate within the part of the pores having the smaller diameter until the desired pore diameter is reached.

## Patentansprüche

1. Anorganische Membran mit einem mechanisch grob-porösen Körper, der Poren hat, die mit einem fein-porösen oder extrem fein-porösen Material gefüllt sind, **dadurch gekennzeichnet,** daß die Poren über eine Länge gefüllt sind, die kürzer als die Dicke des porösen Körpers ist.

2. Anorganische Membran nach Anspruch 1, **dadurch gekenn****zeichnet,** daß die Poren des Körpers mit fein-porösem Material über eine Länge von nicht mehr als 50 µm, vorzugsweise nicht mehr als 10 µm und insbesondere nicht mehr als 1 µm gefüllt sind.

3. Anorganische Membran nach Anspruch 1 und 2, **dadurch ge****kennzeichnet,** daß der grob-poröse Körper Poren enthält, die einen Durchmesser von 100 µm bis 50 nm haben.

4. Anorganische Membran nach Anspruch 1, **gekennzeichnet** **durch** ein grob-poröses Substrat mit einer dünen, weniger porösen Beschichtung darauf mit im wesentlichen gleichförmigen Poren von 10 µm bis 5 nm, wobei die Poren der Beschichtung mit extrem fein-porösem Material über eine begrenzte Länge gefüllt sind.

5. Anorganische Membran nach Anspruch 1, 2 und 3, **dadurch** **gekennzeichnet,** daß der grob-poröse Körper aus gesintertem Metall besteht.

6. Anorganische Membran nach Anspruch 1, 2 und 3, **dadurch** **gekennzeichnet,** daß der grob-poröse Körper aus einem Oxid, beispielsweise Aluminiumoxid, Siliciumoxid, Zirkoniumdioxid oder Titandioxid, oder aus Kohlenstoff besteht.

7. Verfahren zum Herstellen einer anorganischen Membran nach einem der Ansprüche 1 bis 6, **dadurch gekennzeichnet,** daß eine fein-poröse Schicht in einer grob-porösen Schicht aufgebracht wird, indem eine genau bemessene Menge von gelierbarer Flüssigkeit aufgebracht wird, die auf einer Flüssigkeit vorliegt, die mit Wasser und/oder einem Alkohol in der grob-porösen Schicht unmischbar oder schlecht mischbar ist, und indem anschließend der Gelierprozeß vervollständigt wird.

8. Verfahren nach Anspruch 7, **dadurch gekennzeichnet,** daß die gelierbare Schicht eine katalytisch aktive Verbindung (einen Vorläufer davon) enthält.

9. Verfahren nach Anspruch 7 bis 8, **dadurch gekennzeichnet,** daß auf eine Seite der grob-porösen Schicht zuerst eine dünne Schicht einer Verbindung aufgebracht wird, die verhältnismäßig weite Poren hat, wobei die Verbindung so ausgewählt wird, daß während einer nachfolgenden Ablagerungsausfällung einer unlöslichen Verbindung aus einer homogenen Lösung die unlösliche Verbindung lediglich auf dem anfänglich aufgebrachten Material niedergeschlagen wird.

10. Verfahren nach Anspruch 7 bis 8, **dadurch gekennzeichnet,** daß die gelierbare Menge von Flüssigkeit aufgebracht wird, indem man die Flüssigkeit, die mit Wasser oder Alkohol schlecht mischbar ist, in der grob-porösen Schicht aufsteigen läßt.

11. Verfahren nach Anspruch 7 bis 8, **dadurch gekennzeichnet,** daß die gelierbare Menge von Flüssigkeit aufgebracht wird, indem bis zu einem begrenzten Ausmaß eine Flüssigkeit verdrängt wird, die schlecht mit Wasser oder Alkohol mischbar ist, wobei die Flüssigkeit gerade die Poren der grob-porösen Schicht ausfüllt.

12. Verfahren nach Anspruch 7 bis 8, **dadurch gekennzeichnet,** daß die gelierbare Menge von Flüssigkeit aufgebracht wird, indem man sie über die obere Fläche einer grob-porösen Schicht fliessen läßt, wobei die Poren mit einer Flüssigkeit unvollständig gefüllt werden, die mit Wasser oder Alkohol schlecht mischbar ist.

13. Verfahren nach Anspruch 7 bis 8, **dadurch gekennzeichnet,** daß die gelierbare Menge von Flüssigkeit aufgebracht wird, indem der Pegel einer Flüssigkeit, die mit Wasser oder Alkohol schlecht mischbar ist und auf die eine gelierbare Flüssigkeit in der gewünschten Schichtstärke aufgebracht wurde, auf die gewünschte Position in einer grob-porösen Schicht abgesenkt wird.

14. Verfahren nach Anspruch 7 bis 8, **dadurch gekennzeichnet,** daß man mit einem Körper beginnt, der Poren über eine begrenzte Länge mit einem Durchmesser hat, der kleiner als der Durchmesser in dem größeren Teil der Membran ist.

15. Verfahren nach Anspruch 14, **dadurch gekennzeichnet,** daß die gelierbare Flüssigkeit veranlaßt wird, in einem Teil der Poren, die den kleineren Durchmesser haben, selektiv absorbiert zu werden, und die anschließend in an sich bekannter Weise gelieren darf.

16. Verfahren nach Anspruch 14, **dadurch gekennzeichnet,** daß ein geeigneter Stoff dazu gebracht wird, sich in dem Teil der Poren niederzuschlagen, die einen kleineren Durchmesser haben, bis der gewünschte Porendurchmesser erreicht ist.

## Revendications

1. Membrane inorganique comprenant un corps mécanique à larges pores, présentant des pores remplis d'un matériau à pores fins ou extrêmement fins, caractérisée en ce que les pores ont été remplis sur une longueur inférieure à l'épaisseur dudit corps poreux.

2. Membrane inorganique selon la revendication 1, caractérisée en ce que les pores du corps sont remplis d'un matériau à pores fins sur une longueur inférieure ou égale à 50 micromètres, de préférence inférieure ou égale à 10 micromètres, et si possible inférieure ou égale à 1 micromètre.

3. Membrane inorganique selon les revendications 1 et 2, caractérisée en ce que le corps à larges pores présente des pores d'un diamètre compris entre 100 micromètres et 50 nanomètres.

4. Membrane inorganique selon la revendication 1, caractérisée en ce qu'elle comprend un substrat à larges pores recouvert d'un revêtement fin moins poreux, présentant des pores essentiellement uniformes de 10 micromètres à 5 nanomètres, les pores dudit revêtement étant remplis d'un matériau à pores extrêmement fins sur une longueur limitée.

5. Membrane inorganique selon les revendications 1, 2 et 3, caractérisée en ce que le corps à larges pores est un métal fritté.

6. Membrane inorganique selon les revendications 1, 2 et 3, caractérisée en ce que ledit corps à larges pores est un oxyde tel que l'oxyde d'aluminium, l'oxyde de silicium, le dioxyde de zirconium, de titane, ou de carbone.

7. Méthode de fabrication d'une membrane inorganique selon l'une quelconque des revendications 1 à 6, caractérisée en ce qu'une couche à pores fins est déposée à l'intérieur d'une couche à larges pores, par application d'une quantité dosée avec précision de liquide gélifiable présent sur un liquide immiscible ou faiblement miscible avec l'eau et/ou l'alcool à l'intérieur de ladite couche à larges pores, puis par gélification.

8. Méthode selon la revendication 7, caractérisée en ce que le liquide gélifiable contient un (précurseur d'un) composé catalytiquement actif.

9. Méthode selon les revendications 7 et 8, caractérisée en ce qu'une fine couche d'un composé présentant des pores relativement larges est tout d'abord appliquée sur une face de la couche à larges pores, lequel composé a été sélectionné de telle sorte que pendant un processus ultérieur de déposition-précipitation d'un composé insoluble à partir d'une solution homogène, le composé insoluble est uniquement précipité sur le matériau initialement appliqué.

10. Méthode selon les revendications 7 et 8, caractérisée en ce que la quantité gélifiable de liquide est appliquée de telle sorte que le liquide qui est faiblement miscible avec l'eau ou l'alcool monte à l'intérieur de la couche à larges pores.

11. Méthode selon les revendications 7 et 8, caractérisée en ce que la quantité gélifiable de liquide est appliquée par déplacement, dans une certaine limite, d'un liquide faiblement miscible avec l'eau ou l'alcool, lequel liquide remplit uniquement les pores de la couche à larges pores.

12. Méthode selon les revendications 7 et 8, caractérisée en ce que la quantité gélifiable de liquide est appliquée de telle sorte qu'elle s'écoule sur la surface supérieure d'une couche à larges pores, dont les pores sont incomplètement remplis d'un liquide faiblement miscible avec l'eau ou l'alcool.

13. Méthode selon les revendications 7 et 8, caractérisée en ce que la quantité gélifiable de liquide est appliquée de telle sorte que le niveau d'un liquide faiblement miscible avec l'eau ou l'alcool, et sur lequel un liquide gélifiable a été déposé selon l'épaisseur de couche désirée, baisse à la position désirée dans une couche à larges pores.

14. Méthode selon les revendications 7 et 8, caractérisée en ce que l'on part d'un corps présentant des pores qui ont, sur une longueur limitée, un diamètre inférieur au diamètre de la majeure partie de la membrane.

15. Méthode selon la revendication 14, caractérisée en ce qu'un liquide gélifiable est sélectivement absorbé à l'intérieur de la partie des pores de plus faible diamètre, avant de gélifier d'une manière connue par ailleurs.

16. Méthode selon la revendication 14, caractérisée en ce qu'un matériau approprié précipite à l'intérieur de la partie des pores de plus faible diamètre jusqu'à ce que les pores atteignent le diamètre désiré.
